# EUROPEAN PATENT SPECIFICATION

(11) **EP 2 895 014 B1**
(45) Date of publication and mention of the grant of the patent: **13.03.2019**
(21) Application number: 13767141.8
(22) Date of filing: 09.09.2013
(51) Int. Cl.: A23L 3/005, A23L 3/22, A23B 4/01, H05B 6/54

(54) **DEVICE FOR PASTEURIZING A MASS OF FOODSTUFF**
VORRICHTUNG ZUR PASTEURISIERUNG EINER LEBENSMITTELMASSE
DISPOSITIF DE PASTEURISATION D'UNE MASSE DE PRODUITS ALIMENTAIRES

(30) Priority: 14.09.2012 NL 2009466
(43) Date of publication of application: 22.07.2015
(73) Proprietor: Zwanenberg Food Group B.V., 7609 RG Almelo (NL)
(72) Inventor: SONDER, Herbert Laurentius Maria, NL-7622 DB Borne (NL)
(74) Representative: Slikker, Wilhelmina Johanna
(86) International application number: PCT/NL2013/050646
(87) International publication number: WO 2014/042523

(56) References cited:
- EP-B1- 2 007 230
- WO-A1-03/081953
- WO-A1-2011/062499
- US-A- 5 290 583

## Description

The invention relates to a device for pasteurizing a mass of foodstuff, such as a mass containing soya ingredients, a mass containing eggs, a mass containing fruits, for instance jam, a mass containing potatoes, or a mass containing meat, or the like, which device comprises:
a feed for supplying the mass;
heating means for heating the mass, comprising:
   a tube of an electrically and magnetically inert material connecting to the feed;
   a system of mutually co-acting electrodes which are added to the tube and which are connected to an RF power generator which generates energy at a frequency in the range of about 10-50 MHZ to the electrodes such that the mass present in the first tube can be heated during its first residence time in this first tube; and
a discharge for discharging the mass.

Such a device is known from EP-B1 -2 007 230 and WO-A1-2011/062499 in the name of the present applicant. Applicant has found that in the device of EP-B1-2 007 230 and WO-A1-2011/062499 high field strengths, also referred to as 'hot spots', can occur locally, whereby the mass of foodstuff can burn or even become charred.

It is an object of the present invention to at least partially obviate the above stated drawback. It is a particular object of the invention to provide a device of the type stated in the preamble with which a mass of foodstuff can be heated uniformly for the purpose of pasteurizing the mass and with which burning or charring of the mass can be prevented.

The device of the type stated in the preamble has for this purpose the special feature according to the invention that the electrodes have rounded corners on their end zones facing toward the inner surface of the tube for the purpose of locally limiting the strength of the electric field generated by the electrodes.

Providing electrodes with rounded corners on their end zones facing toward the inner surface of the tube effectively prevents the occurrence of field strengths which are locally too high, so that burning or charring of the mass can be prevented.

It is noted that the end zones of the electrodes facing toward the inner surface of the tube are understood to mean the axial end zones of the electrodes as seen in longitudinal section.

The radius of curvature of the rounded corners amounts for instance to a minimum of 3 mm, in particular about 10 mm. Applicant has found that too large a radius of curvature of the rounded corners can have the consequence that a possibly considerable part of the energy is not transmitted to the mass for pasteurizing, while too small a radius of curvature can still result in hot spots. Applicant has found that a highly suitable radius of curvature of the rounded corners lies between 3 mm and 10 mm. The radius of curvature of the rounded corners is in particular larger than 3 mm and smaller than 10 mm. The radius of curvature of the rounded corners can have any desired value in this range such as, but not limited to, 4 mm, 5 mm, 6 mm, 7 mm, 8 mm or 9 mm.

The heating means can optionally comprise a first jacket extending around the first tube and filled with a heatable first liquid.

In an embodiment of the device according to the invention the electrodes arc disposed with a mutual axial interspace, this interspace being at least 2x, preferably 5x, more preferably 10x larger than the largest linear transverse dimension of the inner space of the tube.

In the case of such electrodes disposed with a mutual axial interspace the electric field prevailing between adjacent electrodes extends substantially in the longitudinal direction of the tube, whereby an effective heating of the mass is realized over a substantial distance. Because an effective heating takes place between the electrodes over the whole distance and during the corresponding residence time, a high flow rate of the mass and a correspondingly high output can in this way be obtained.

Alternatively, the electrodes can he disposed on either side of the tube as seen in cross-section.

The electrodes preferably each have a shape corresponding to the external shape of the tube. If the tube is a cylindrical tube, the electrodes disposed with a mutual axial interspace can for instance have a cylindrical shape. The electrodes disposed on either side of the tube as seen in cross-section can for instance be plate-like electrodes which, in the case of a cylindrical tube, are curved around the tube.

According to the invention, the electrodes are disposed electrically insulated relative to the inner surface of the tube coming into direct contact with the mass of foodstuff.

According to another aspect of the invention, the device comprises a second tube connecting to the tube and having second heating means, wherein the hot mass is held at substantially constant temperature during its second residence time in the second tube.

The second heating means can in principle be implemented in any desired manner. It will be apparent that the mass heated in the first tube by these electrical means must be prevented from undergoing a certain drying or other degeneration during its residence in the second heating means. A longer stay in air will generally result in undesirable effects, such as drying and possibly even oxidation.

Very suitable is an embodiment comprising a jacket extending around the second tube and filled with a heatable liquid. During a residence time of a minimum of two minutes in the second tube the temperature everywhere in the second tube may not fall below a determined prescribed temperature, usually in the order of magnitude of 72°C - 75°C. In a specific embodiment the device can for this purpose have the special feature that the liquid in the second jacket is held at a temperature in the range of about 70°C - 100°C. It is noted that the jacket and the second jacket can be formed integrally.

The pasteurizing process performed by the device according to the invention can also serve to allow the treated mass to be cured by the heating occurring for some period of time. A mixture of for instance meat ingredients, salt, spices and binding agents can thus be formed in one continuous treatment with the device according to the invention into a continuous sausage which is then portioned under sterile conditions, packaged and if necessary further confectioned, after which transport to the customers can take place.

According to a subsequent aspect according to the invention, the device has the special feature that the first residence time and the RMS RF voltage over the electrodes can be adjusted such that the temperature of the mass at the end of the first tube has a value in the range of about 70°C - 100°C.

For further processing of the mass thus pasteurized in the device, it will in many cases have to be given the opportunity to cool before being portioned and packed. This cooling can if desired take place after portioning and packing.

An embodiment is often recommended comprising cooling means which connect to the second heating means and in which the hot mass is given the opportunity to cool during its third residence time in these cooling means, at the end of which cooling means the thus cooled mass is discharged for further processing. The cooling means can for instance comprise a third tube connecting to the second tube.

Such a third tube can be wound in the form of a helix, thereby obtaining a great length in a relatively small space, whereby, optionally in combination with an external cooling medium, for instance air flowing by, a rapid cooling is obtained. Other than in the dielectric heating in the first tube, in this cooling section the heat is removed from the pasteurized mass solely by conduction. Necessary for this purpose is time, and therefore a relatively great length.

Use can also be made in per se known manner of a portioning process, optionally followed by a packing process, wherein the portions are guided through a cooling space by means of trolleys. A per se known lift-tower is suitable in this respect.

Attention is drawn to the fact that the inner diameter of the tubes does not have to be round. Any desired and technically realizable form can be chosen.

A material which is completely transparent for said frequencies is a plastic, for instance PTFE (polytetrafluoroethylene). This material has the further advantage of being very suitable for contact with food. It is a smooth material to which food products do not adhere, or hardly so. The material can further be very easily given a smooth finish, and thus be cleaned regularly in accordance with set requirements.

The electrodes can be of any suitable material. Aluminium plates can for instance be applied.

The device has an in-line arrangement and is able to perform a continuous and very homogeneous heating, wherein it can be ensured that the temperature difference between the hottest and the coldest zones in the heated mass is less than 5°C.

The system is capable of a rapid heating into the core of the mass, for instance at a speed in the order of magnitude of 1°C/s.

The temperature of the supplied mass can be assumed to be about 0°C - 10°C. The target temperature is reached at the end of the electrodes.

According to a determined aspect of the invention, the device has the special feature that the material of the second tube is stainless steel.

The device can also have the special feature that the material of the third tube is stainless steel.

Very practical is the embodiment in which the second and the third tube are embodied together as an integral tube.

The setting of said parameters for reaching said temperature depends on, among other factors, the salt content of the mass. The choice of the parameters must therefore also he made in the light thereof.

According to a following aspect of the invention, the device has the special feature that the average effective internal diameter of the first tube is in the range of about 20 - 150 mm. A value of 50 - 115 mm is particularly envisaged here.

Another aspect of the dimensioning of the device can lie in the length of the electrodes being in the range of about 0.1 - 1 m. The electrodes preferably have a length in the order of 0.2 - 0.7 m.

For the safety of operating staff and others present, the embodiment is recommended in which all RF voltage-carrying components are accommodated in a housing, in particular a Faraday cage. The mesh of the Faraday cage can be relatively coarse in respect of the relatively large wavelength, relative to microwave radiation, associated with the frequencies applied according to the invention.

A preferred aspect according to the invention lies in the fact that the electrodes are coupled to the associated RF generator via an adjustable impedance matching circuit.

The device can for instance have the feature that the feed is configured for coupling to a preproduction device, for instance a meat pump. For this purpose the inlet side of the first tube can be provided with a flange, which is configured for sealing coupling to a correspondingly formed outlet flange of a known meat pump.

The device can have the particular feature that the frequency lies in the range of 12 - 29 MHZ.

According to yet another aspect of the invention, the device has the feature that the frequency has a value of 27 ± 2 MHZ. The frequency 27.12 MHZ is for instance a frequency allowed for industrial applications such as the present ones.

According to yet another aspect of the invention, the device has the special feature that the frequency has a value of 13.5 ± 1 MHZ. The frequency 13.56 MHZ is likewise allowed for industrial applications such as the present ones.

According to a final aspect of the invention, the device has the special feature that downstream of the sccond tube a treatment section is present in which the hot mass is subjected to an after-treatment, such as smoking, adding of seasoning, grilling or the like.

The invention will now be elucidated with reference to the accompanying drawings. In the drawings:
Fig. 1 shows a schematic longitudinal section of a highly simplified representation of a device according to EP-B1-2 007 230;
Fig. 2 shows the device according to fig. 1 with the electrode according to the invention in detail therein;
Fig. 3 shows partially in the form of a block diagram and partially in cross-section a highly simplified representation of a device according to WO-A1-2011/062499;
Fig. 4-6 show in detail the tube of the device according to fig. 3 with the electrode according to the invention in detail therein.

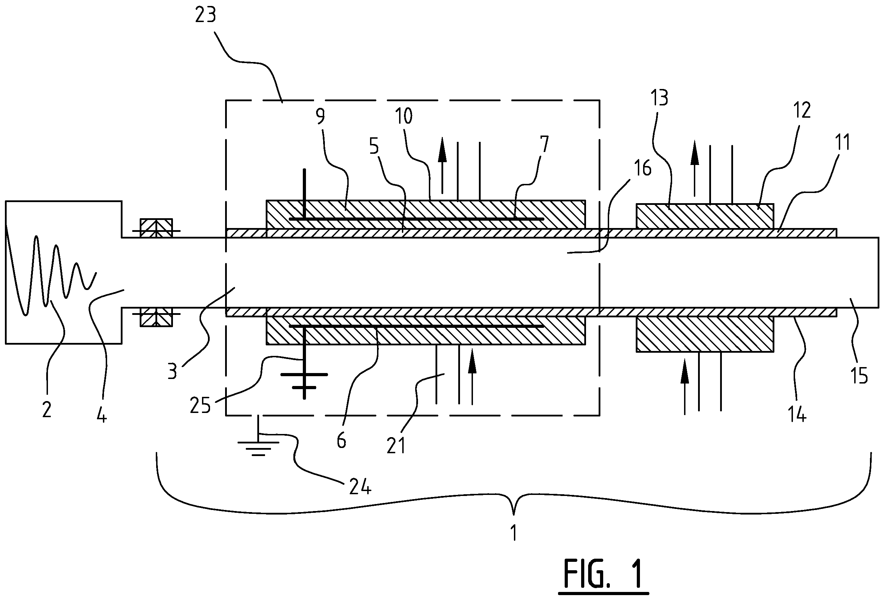

Figure 1 show a device 1 from EP-B1-2 007 230 for cooking and pasteurizing a meat-containing mass 4, which mass 4 is supplied to device 1 by a meat pump 2 of known type. For a further elucidation of the device of EP-B1-2 007 230, this document is included herein by way of reference. The device comprises a feed 3 through which a mass 4 is supplied under pressure to device 1 at a determined flow rate; a first tube 5, connecting to feed 3, of an electrically and magnetically inert material suitable for contact with food, in particular PTFE; two plate-like electrodes 6, 7 situated on either side of first tube 5 and having a form corresponding to the external shape of first tube 5, which electrodes are connected to an RF power generator (not shown) which generates energy with a frequency in the range of about 27.12 MHZ to electrodes 6, 7 such that mass 4 present in first tube 5 is heated dielectrically during its first residence time in this first tube 5; a first jacket 10 extending around first tube 5 and filled with demineralized water 9; a second tube 11 which connects to first tube 5 and in which the mass heated in first tube 5 is held at substantially constant temperature during its second residence time of a minimum of two minutes in the second tube; a second jacket 13 extending around second tube 11 and filled with thermal oil 12; and a relatively long third tube 14 which connects to second tube 11 and in which the hot mass is given the opportunity to cool during its third residence time in this third tube, at the end 15 of which third tube 14 the thus cooled mass is discharged for further processing, for instance portioning and/or packing.

Second tube 11 and third tube 14 are embodied together as one integral, monolithic tube of stainless steel.

The first residence time and the RMS RF voltage over the electrodes can be adjusted such that the temperature of mass 4 has a value in the range of about 70°C - 90°C at the end 16 of first tube 5. For an energy transfer, and thus heating of mass 4, with the highest possible efficiency, the electrodes 6, 7 are coupled to the RF generator via an impedance matching circuit. The impedance matching circuit comprises a variable capacitor conncctcd in series and a variable sccond capacitor connected in parallel to electrodes 6, 7.

The RF generator can be configured to generate energy with a frequency of for instance 27.12 MHz or 13.56 MHz. These are both legally permissible frequencies for industrial applications of this type.

The first liquid is held at a desired temperature of for instance 40°C by means of a heating device 20 having a heat exchanger with a pump. In this embodiment a demineralizing unit is also incorporated in supply conduit 21. In this case use is made of water. Other liquids such as thermal oil are also suitable.

The second liquid 12 can he brought to and held at the desired temperature in similar manner.

With a view to the set requirements for pasteurization, the residence time of the hot mass in second tube 11 must be a minimum of two minutes.

The RF voltage-carrying components are all accommodated in a Faraday cage 23. This Faraday cage is earthed via an earth wire 24. Electrode 6 is also earthed, via an earth wire 25 with which the electrode is also coupled to the RF generator. This is therefore also earthed. Both the Faraday cage and said earthings are essential for the safety of operating staff.

It will be apparent that, also in the light of legal stipulations, the device will comprise further safety provisions which for instance ensure that, when the device is opened or the Faraday cage earthing is interrupted, the RF voltage of the electrodes is immediately switched off, for instance by immediately switching off the RF power generator or generators.

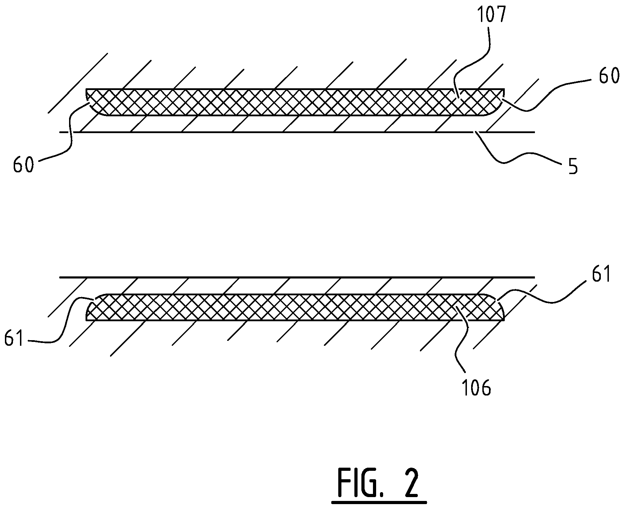

Figure 2 shows the device according to figure 1 with electrodes 106, 107 according to the invention therein. Electrodes 106, 107 are the same as electrodes 6, 7 according to figure 1, with the difference that electrodes 106, 107 have rounded corners 60, 61 on their end zones facing toward the inner surface of tube 5, or the axial end zones as seen in longitudinal section. The rounded corners prevent peak voltages in the electric field generated by electrodes 106, 107 so that burning or charring of mass 4 is prevented.

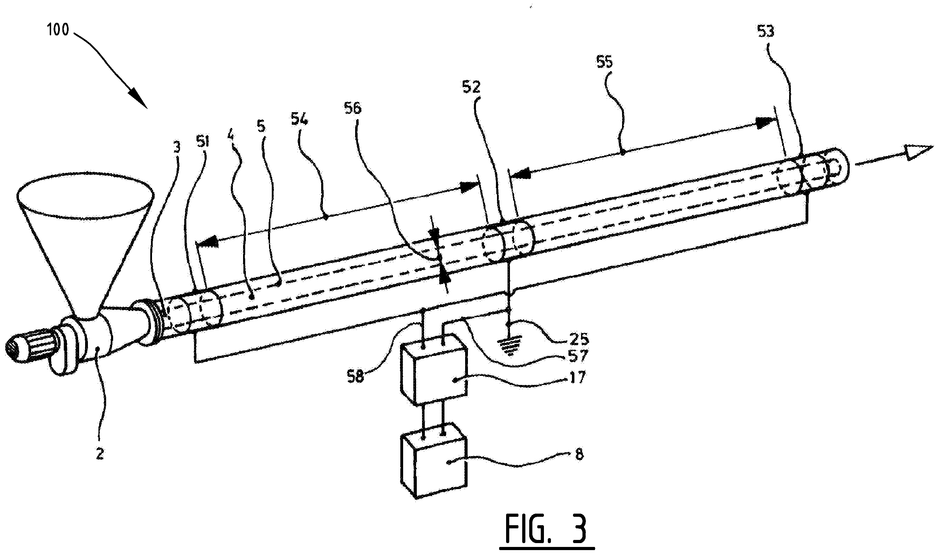

Figure 3 shows a device 100 from WO-A1-2011/062499. Other than in device 1 according to figures 1 and 2, electrodes 51, 52, 53 are disposed with mutual interspaces 54, 55 (equal to each other in this embodiment), which interspaces 54, 55 are substantially larger than the diameter 56 of the in this case cylindrically formed inner space of tube 5. It is for instance possible to envisage a diameter 56 in the order of 60 mm and a mutual spacing between adjacent electrodes 51, 52; 52, 53 in the order of 1 m or more.

Shown in a block diagram in figure 3 is that the impedance matching circuit 17 is received between RF generator 8 and electrodes 51, 52 and 53. This is not necessary however under all conditions. It is possible to envisage provisions being incorporated in generator 8 which realize an adjustability such that the greatest possible energy transfer is ensured.

Central electrode 52 is earthed and connected to the carthed, "cold" output terminal 57 of impedance matching circuit 17. Electrodes 51 and 53 lying symmetrically on either side of electrode 52 are both connected to the "hot" output terminal 58 of impedance matching circuit 17.

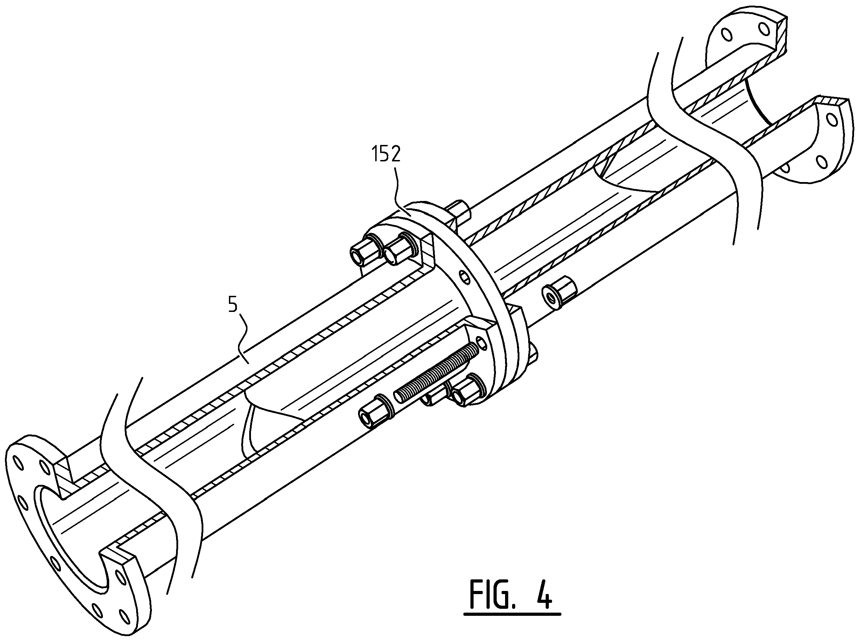

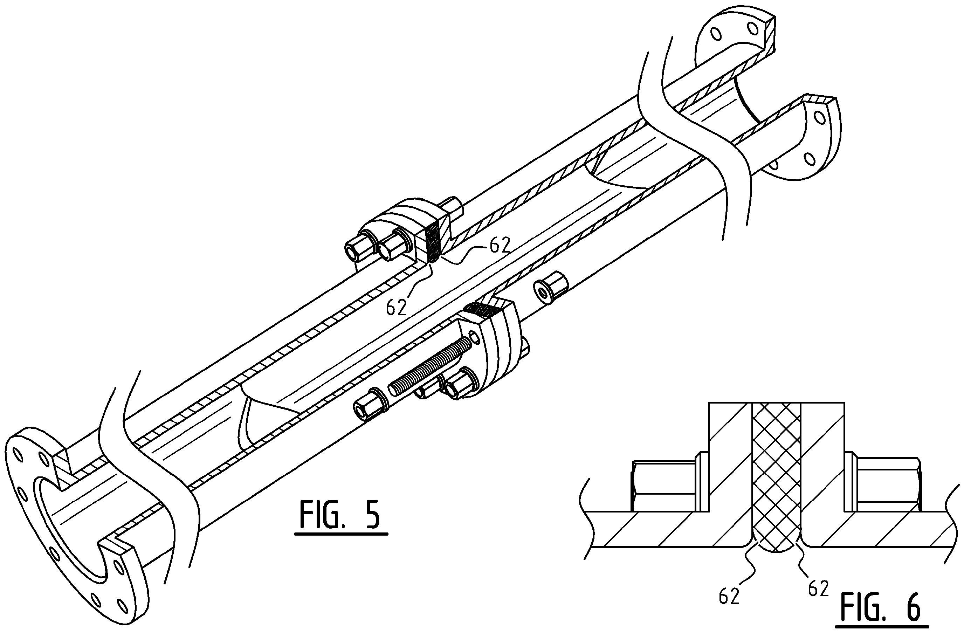

Figures 4-6 show in detail the tube 5 of device 100 according to figure 3 with electrodes 152 according to the invention in detail therein. Electrode 152 is the same as electrode 52 according to figure 3, with the difference that electrode 152 has rounded corners 62 on its end zones facing toward the inner surface of tube 5, or the axial end zones as seen in longitudinal section. Electrodes 51 and 53 of figure 3 are not shown in figures 4-6, but it will be apparent that these electrodes also have such rounded corners 62. The rounded corners 62 prevent peak voltages in the electric field generated by the electrodes so that burning or charring of mass 4 is prevented.

It is noted that the invention is not limited to the above discussed exemplary embodiments but extends to other variants within the scope of the appended claims.

## Claims

1. Device for pasteurizing a mass of foodstuff, such as a mass containing soya ingredients, a mass containing eggs, a mass containing fruits, for instance jam, a mass containing potatoes, or a mass containing meat, or the like, which device comprises:
a feed for supplying the mass;
heating means for heating the mass, comprising:
a tube of an electrically and magnetically inert material connecting to the feed;
a system of mutually co-acting electrodes which are added to the tube and which are connected to an RF power generator which generates energy at a frequency in the range of about 10-50 MHZ to the electrodes such that the mass present in the first tube can be heated during its first residence time in this first tube; and
a discharge for discharging the mass,
wherein the electrodes are disposed electrically insulated relative to the inner surface of the tube coming into direct contact with the mass of foodstuff,
**characterized in that**
the electrodes have rounded corners on their end zones facing toward the inner surface of the tube for the purpose of locally limiting the strength of the electric field generated by the electrodes.

2. Device as claimed in claim 1, wherein the radius of curvature of the rounded corners amounts to a minimum of about 3 mm.

3. Device as claimed in claim 1, wherein the radius of curvature of the rounded corners amounts to a maximum of about 10 mm.

4. Device as claimed in any of the foregoing claims 1-3, wherein the electrodes are disposed with a mutual axial interspace, this interspace being at least 2x, preferably 5x, more preferably 10x larger than the largest linear transverse dimension of the inner space of the tube.

5. Device as claimed in any of the foregoing claims 1-3, wherein the electrodes are disposed on either side of the tube as seen in cross-section.

6. Device as claimed in any of the foregoing claims 1-5, wherein the electrodes each have a shape corresponding to the external shape of the tube.

7. Device as claimed in any of the foregoing claims 1-6, comprising a second tube connecting to the tube and having second heating means, which is capable to hold the hot mass at substantially constant temperature during its second residence time in the second tube.

## Patentansprüche

1. Vorrichtung zum Pasteurisieren einer Lebensmittelmasse, wie eine Masse, die Sojabestandteile enthält, eine Masse, die Eier enthält, eine Masse, die Früchte enthält, zum Beispiel Marmelade, eine Masse, die Kartoffeln enthält, eine Masse, die Fleisch enthält, oder Ähnliches, wobei die Vorrichtung aufweist:
eine Zuführung zum Zuliefern der Masse;
Erhitzungsmittel zum Erhitzen der Masse, das aufweist:
ein Rohr aus einem elektrisch und magnetisch inerten Material, das mit der Zuführung verbunden ist;
ein System von miteinander zusammenwirkenden Elektroden, die zum Rohr hinzugefügt werden und die mit einem Hochfrequenz-Stromgenerator verbunden sind, der Energie in einer Frequenz im Bereich von etwa 10 bis 50 MHz für die Elektroden erzeugt, sodass die im ersten Rohr vorhandene Masse während der ersten Verweilzeit in dem ersten Rohr erhitzt werden kann; und
einen Ablass zum Ablassen der Masse,
wobei die Elektroden elektrisch isoliert bezüglich der Innenseite des Rohrs, die in direkten Kontakt mit der Lebensmittelmasse kommt, angeordnet sind,
**dadurch gekennzeichnet, dass**
die Elektroden abgerundete Ecken an den Endzonen haben, die der Innenseite des Rohrs zugewandt sind, für den Zweck, die Stärke des von den Elektroden erzeugten elektrischen Felds zu beschränken.

2. Vorrichtung nach Anspruch 1, wobei der Krümmungsradius der abgerundeten Ecken zumindest etwa 3 mm beträgt.

3. Vorrichtung nach Anspruch 1, wobei der Krümmungsradius der abgerundeten Ecken maximal etwa 10 mm beträgt.

4. Vorrichtung nach einem der vorhergehenden Ansprüche 1 bis 3, wobei die Elektroden mit einem gegenseitigen axialen Zwischenraum angeordnet sind, wobei der Zwischenraum mindestens zweimal, vorzugsweise 5-Mal, bevorzugter 10-Mal größer ist als die größte lineare Querabmessung des Innenraums des Rohrs.

5. Vorrichtung nach einem der vorhergehenden Ansprüche 1 bis 3, wobei die Elektroden im Querschnitt gesehen an beiden Seiten des Rohrs angeordnet sind.

6. Vorrichtung nach einem der vorhergehenden Ansprüche 1 bis 5, wobei die Elektroden jeweils eine Form haben, die der Außenform des Rohrs entspricht.

7. Vorrichtung nach einem der vorhergehenden Ansprüche 1 bis 6, ein zweites Rohr aufweisend, das mit dem Rohr verbunden ist und zweite Heizmittel hat, das dazu ausgelegt ist, die heiße Masse während der zweiten Verweilzeit im zweiten Rohr auf einer im Wesentlichen konstanten Temperatur zu halten.

## Revendications

1. Dispositif de pasteurisation d'une masse de produits alimentaires, telle qu'une masse contenant des ingrédients de soja, une masse contenant des oeufs, une masse contenant des fruits, par exemple une confiture, une masse contenant des pommes de terre, ou une masse contenant de la viande, ou similaire, lequel dispositif comprend :
une alimentation pour apporter la masse;
un moyen de chauffage pour chauffer la masse, comprenant:
un tube d'un matériau électriquement et magnétiquement inerte relié à l'alimentation;
un système d'électrodes coopérant mutuellement qui sont ajoutées au tube et qui sont reliées à un générateur d'électricité RF qui génère une énergie à une fréquence dans la plage d'environ 10 à 50 MHz pour les électrodes de telle manière que la masse présente dans le premier tube peut être chauffée durant son premier temps de séjour dans ce premier tube; et
une évacuation pour évacuer la masse,
dans lequel les électrodes sont disposées électriquement isolées par rapport à la surface interne du tube entrant en contact direct avec la masse de produits alimentaires,
**caractérisé en ce que**
les électrodes ont des coins arrondis sur leurs zones d'extrémité faisant face à la surface interne du tube dans le but de limiter localement l'intensité du champ électrique généré par les électrodes.

2. Dispositif selon la revendication 1, dans lequel le rayon de courbure des coins arrondis est égal à un minimum d'environ 3 mm.

3. Dispositif selon la revendication 1, dans lequel le rayon de courbure des coins arrondis est égal à un maximum d'environ 10 mm.

4. Dispositif selon l'une quelconque des revendications précédentes 1 à 3, dans lequel les électrodes sont disposées avec un espace intermédiaire axial mutuel, cet espace intermédiaire étant d'au moins 2x, de préférence 5x, de manière davantage préférée 10x plus grand que la dimension transversale linéaire la plus grande de l'espace interne du tube.

5. Dispositif selon l'une quelconque des revendications précédentes 1 à 3, dans lequel les électrodes sont disposées d'un côté ou de l'autre du tube tel que vu en section transversale.

6. Dispositif selon l'une quelconque des revendications précédentes 1 à 5, dans lequel les électrodes ont chacune une forme correspondant à la forme externe du tube.

7. Dispositif selon l'une quelconque des revendications précédentes 1 à 6, comprenant un second tube relié au tube et ayant un second moyen de chauffage, qui est capable de maintenir la masse chaude à une température sensiblement constante durant son second temps de séjour dans le second tube.
